**Europäisches Patentamt**

**European Patent Office**

**Office européen des brevets**

(19)

(11) Veröffentlichungsnummer: **0 014 782**
**B1**

(12) # EUROPÄISCHE PATENTSCHRIFT

(45) Veröffentlichungstag der Patentschrift:
**19.01.83**

(21) Anmeldenummer: **79200777.5**

(22) Anmeldetag: **18.12.79**

(51) Int. Cl.³: **B 01 D 50/00** // B01D45/12,
B03C3/01

(54) Entstaubungseinrichtung.

(30) Priorität: **23.02.79 DE 2907081**

(43) Veröffentlichungstag der Anmeldung:
**03.09.80 Patentblatt 80/18**

(45) Bekanntmachung des Hinweises auf die Patenterteilung:
**19.01.83 Patentblatt 83/3**

(84) Benannte Vertragsstaaten:
**AT BE DE FR GB IT LU NL SE**

(56) Entgegenhaltungen:
**keine**

(73) Patentinhaber: **METALLGESELLSCHAFT AG,
Reuterweg 14 Postfach 3724, D-6000 Frankfurt/M.1 (DE)**

(72) Erfinder: **Schminke, Heinz, Ing. grad, Bahnstrasse 11,
D-6073 Egelsbach (DE)**
Erfinder: **Schindling, Josef, Karl-Schüler-Weg 3,
D-6230 Frankfurt am Main 80 (DE)**

(74) Vertreter: **Fischer, Ernst, Dr., Reuterweg 14,
D-6000 Frankfurt am Main 1 (DE)**

Entstaubungseinrichtung

Die Erfindung betrifft eine Vorrichtung zum trockenen Entfernen von Staub aus Abgas, bestehend aus einem Fliehkraftabscheider mit zahlreichen Entstaubungszellen und einem nachgeschalteten, horizontal durchströmten Elektrofilter, wobei die Entstaubungszellen in mindestens einer horizontalen Reihe, die senkrecht zu der am Eingang des Elektrofilters herrschenden Strömungsrichtung verläuft, angeordnet sind, zumindest in der dem Elektrofilter nächstgelegenen Reihe die Einlaßöffnungen der Entstaubungszellen höher liegen als das Elektrofilter, die Gasströmungsrichtung in den Entstaubungszellen im wesentlichen senkrecht von oben nach unten verläuft und jede Entstaubungszelle im unteren Bereich einen Staubaustritt und ein Reingasrohr besitzt, das weitgehend entstaubtes Reingas zum Elektrofilter leitet.

Eine Filtervorrichtung dieser Art ist aus DE-A-2 329 248 bekannt, wobei dem Elektrofilter bevorzugt zwei in Reihe oder parallel geschaltete, als Zyklone ausgebildete Entstaubungszellen zur Grobreinigung vorgeschaltet sind. Aus BE-A-511 569 und US-A-2 713 920 kennt man Fliehkraftabscheider mit einer großen Anzahl Entstaubungszellen vor einem Elektrofilter. In diesen Entstaubungszellen wird das zu reinigende Gas um 180° umgelenkt und strömt im Reingasrohr der Zelle schräg nach oben zum Elektrofilter.

Aufgabe der Erfindung ist es, in der eingangs genannten Vorrichtung den Fliehkraftabscheider auf einfache und kompakte Weise auszubilden und damit eine möglichst gleichmäßige Verteilung des zum Elektrofilter strömenden Gases zu erreichen.

Erfindungsgemäß wird dies dadurch erreicht, daß je zwei benachbarte Reingasrohre einer Reihe in den dachförmigen oberen Abschluß eines gemeinsamen Reingasschachtes münden, daß jeder Reingasschacht taschenartig mit zwei senkrechten Seitenwänden, einer schrägen Rückwand und einer zum Elektrofilter hin offenen Austrittsseite ausgebildet ist und daß zwischen benachbarten Reingasschächten eine zu einem Staubbunker geneigte Staubleitwand derart angeordnet ist, daß sie den Durchtritt des vom Fliehkraftabscheider abgeschiedenen Staubes zum Elektrofilter verhindert. Wesentliche Teile des Fliehkraftabscheiders sind höher als das Elektrofilter angeordnet und die einfache Ausbildung der Entstaubungszellen sorgt für einen geringen Druckverlust in diesem Bereich.

Es ist zweckmäßig, daß die Breite der Reihe oder Reihen der Entstaubungszellen gleich der Breite des Elektrofilters ist. Dadurch wird die gleichmäßige Gasverteilung in horizontaler Richtung vor dem Elektrofilter weiter verbessert.

Eine Weiterbildung der Erfindung besteht darin, daß bei mehreren Reihen von Entstaubungszellen diese in der Höhe gestaffelt angeordnet sind, wobei die dem Elektrofilter nächstliegende Reihe die höchstliegende ist. Durch die Staffelung der Entstaubungszellen münden sie reingasseitig in verschiedener Höhe vor dem Elektrofilter. Hierdurch läßt sich die Gasströmung zum Elektrofilter in vertikaler Richtung vergleichmäßigen.

Die von oben nach unten durchströmten Entstaubungszellen bestehen hauptsächlich aus einem die Gasströmung in Rotation versetzenden Einlaßteil, einem senkrechten Abscheiderohr und einem Reingasrohr mit kleinerem Durchmesser als das Abscheiderohr. Das Reingasrohr mündet in den taschenartigen Reingasschacht, der so geformt ist, daß er das die Entstaubungszelle verlassende, grob gereinigte Gas in der gewünschten Richtung zum Elektrofilter leitet. Vorteilhafterweise besitzt jeder der Reingasschächte mindestens ein Leitblech zur Führung des ausströmenden Gases. Diese Leitbleche unterteilen den Strömungsraum im Reingasschacht und leiten die Gasströme in der gewünschten Richtung hin zum Elektrofilter. Um das Anhaften von Staub in den Entstaubungszellen zu vermeiden, können diese mit einem Klopfmechanismus ausgerüstet sein.

Eine Ausführungsform der Entstaubungsvorrichtung wird mit Hilfe der Zeichnung erläutert. Hierbei sind alle Entstaubungszellen auf gleicher Höhe angeordnet, was jedoch nicht unbedingt nötig ist. Es zeigt

Fig. 1 einen senkrechten Schnitt durch die Entstaubungseinrichtung etwa parallel zur Strömungsrichtung des Gases (entlang der Linie I-I der Fig. 3 und 4),

Fig. 2 einen Vertikalschnitt ähnlich dem der Fig. 1 entlang der Linie II-II in den Fig. 3 und 4,

Fig. 3 einen Vertikalschnitt senkrecht zur Strömungsrichtung im Elektrofilter entlang der Linie III-III in den Fig. 1, 2 und 4 und

Fig. 4 einen horizontalen Schnitt durch den Fliehkraftabscheider entlang der Linie IV-IV in den Fig. 1 und 2.

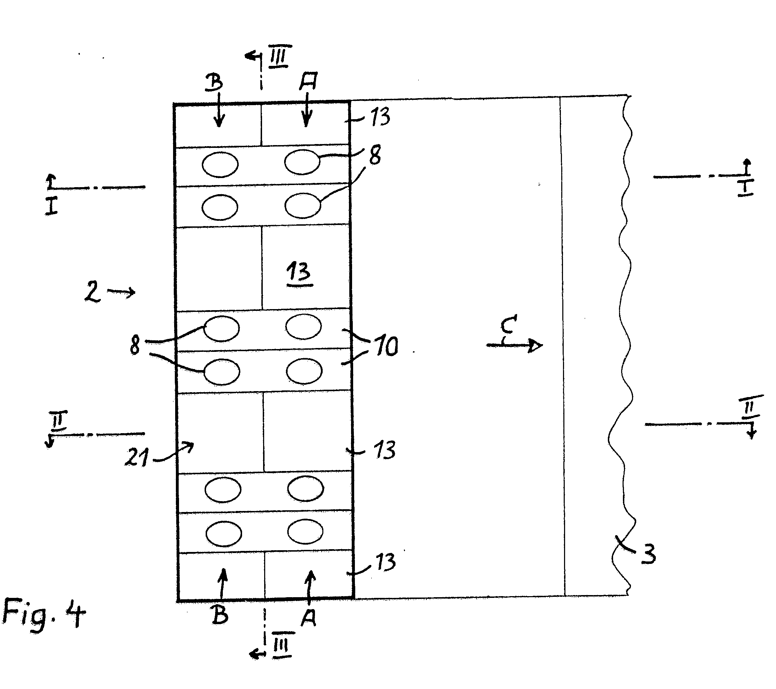

Die wesentlichen Teile der Entstaubungsanlage sind der Rohgaseintritt 1, der Fliehkraftabscheider 2 und das nachgeschaltete Elektrofilter 3. Der Fliehkraftabscheider weist eine Vielzahl von rohrförmigen Entstaubungszellen 4 auf. Die Entstaubungszellen sind in zwei Reihen A und B angeordnet (vgl. insbesondere Fig. 4), die horizontal und senkrecht zur Strömungsrichtung (Pfeil C) am Eingang des Elektrofilters verlaufen. Die Anzahl der Entstaubungszellen sowie die Anzahl ihrer Reihen kann beliebig gewählt werden und wird sich im allgemeinen an wirtschaftlichen Gesichtspunkten orientieren.

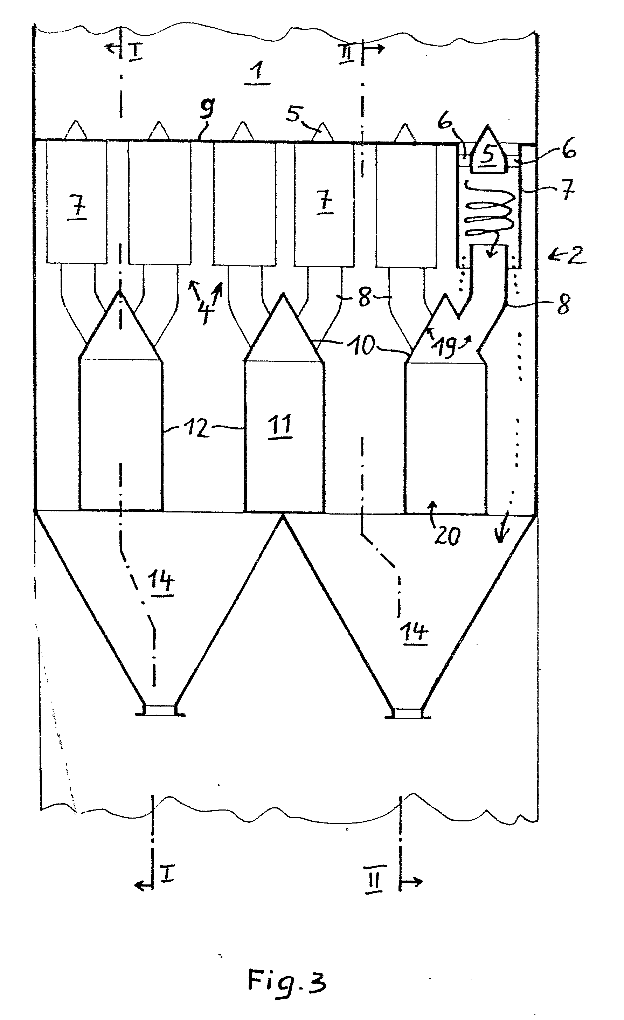

In Fig. 3 ist der Längsschnitt durch eine einzelne Entstaubungszelle wiedergegeben. Im Bereich des Rohgaseinlasses besitzt sie einen etwa kegelförmigen Verdrängerkörper 5, der von einem Kranz schräg gestellter Führungsflügel 6 umgeben ist. Diese Flügel bewirken, daß das einströmende Rohgas in Rotation um eine senkrechte Achse versetzt wird. Der spezifisch schwerere Staub wird dabei an die Innenwand des senkrechten Abscheiderohres 7 geschleudert und das weitgehend entstaubte Reingas wird durch das etwas gekrümmte Reingasrohr 8 abgeführt. Ein Zwischenboden 9 in Höhe der Einlaßöffnungen der Abscheiderohre 7 verhindert den Gasdurchtritt von oben nach unten an den Entstaubungszellen 4 vorbei.

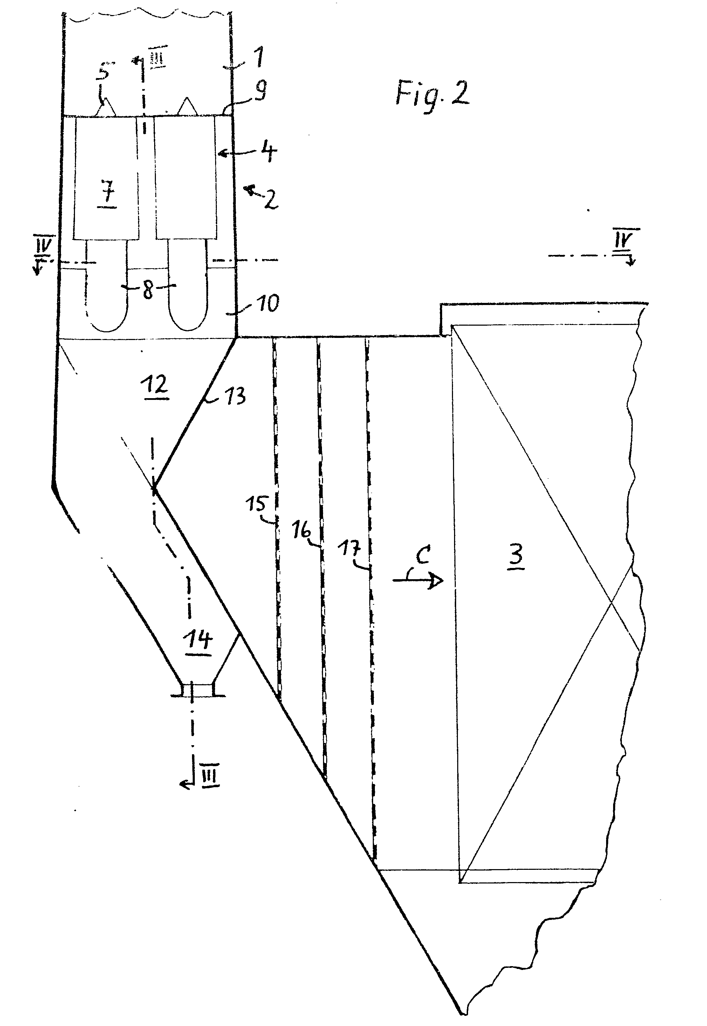

Jedes Reingasrohr 8 mündet in den dachförmigen oberen Abschluß 10 eines Reingasschachtes 11. Die beiden vertikalen Seitenwände 12 eines jeden Reingasschachtes 11 haben die Form eines auf der Spitze stehenden Dreiecks, wie es am besten Fig. 2 entnommen werden kann. Der horizontale Abstand zwischen benachbarten Reingasschächten 11, vgl. Fig. 3, entspricht ziemlich genau der Schachtbreite. Außerhalb der Reingasschächte und zwischen deren Seitenwänden 12 befinden sich schräge Staubleitwände 13, die am besten in den Fig. 2 und 4 zu erkennen sind. 'Staub, der von den Entstaubungszellen 4 kommt, vgl. auch Fig. 3, fällt entlang dieser Staubleitwände 13 herunter und in die Staubsammelbunker 14.

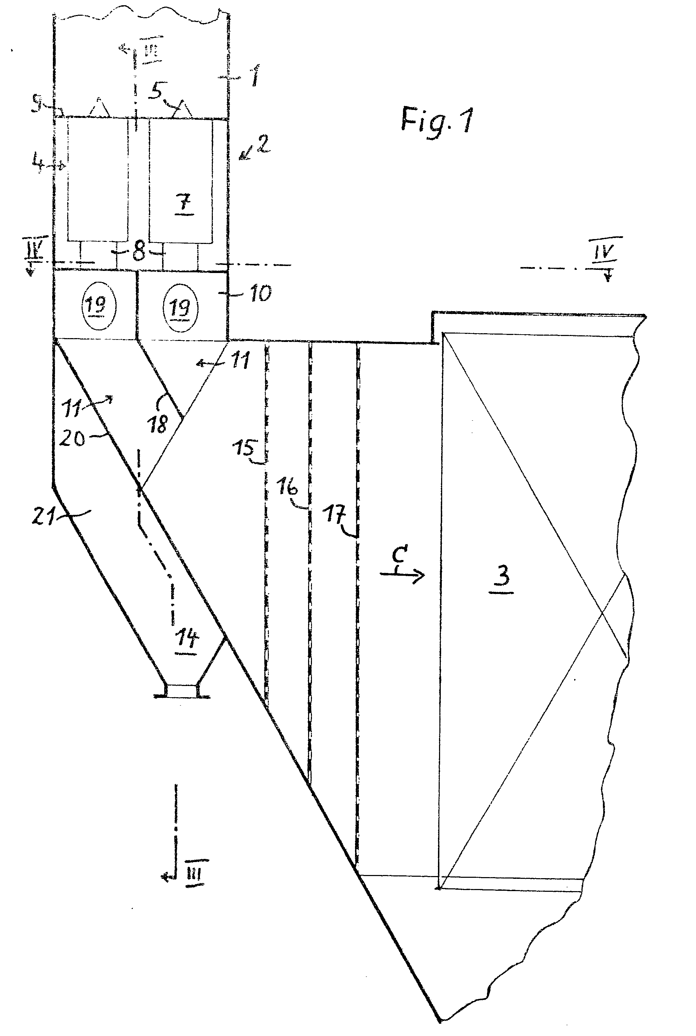

Das Reingas verläßt den Reingasschacht 11 durch dessen offene Austrittsseite, vgl. Fig. 1, und strömt zunächst durch drei perforierte Bleche 15, 16 und 17. Danach tritt es in Richtung des Pfeils C, vgl. Fig. 1, 2 und 4, in das Elektrofilter 3 ein.

Um die vertikale Gasverteilung zu vergleichmäßigen, besitzen die Reingasschächte 11 jeweils ein Leitblech 18, das in Fig. 1 wiedergegeben ist. Dieses Leitblech verhindert, daß vom Reingasschacht 11 aus das Gas hauptsächlich nach unten strömt, so daß der obere Bereich des Elektrofilters unzureichend durchströmt würde. Der Vergleichmäßigung der Gasströmung dienen auch die perforierten Bleche 15 bis 17.

Es ist vorteilhaft, daß die Reingasrohre 8 der Entstaubungszellen eine Länge vom 1- bis 2fachen des Durchmessers aufweisen. In Fig. 1 sind die Einmündungen 19 zweier Reingasrohre 8 im dachförmigen oberen Abschluß 10 eines Reingasschachtes 11 zu sehen. Dieser Figur ist auch zu entnehmen, daß die schräge Rückwand 20 des Reingasschachtes zwischen sich und dem Einlauf zum Staubbunker 14 so viel Platz läßt, daß dieser Bereich 21 für eine Wartungsperson begehbar ausgebildet werden kann.

**Patentansprüche**

1. Vorrichtung zum trockenen Entfernen von Staub aus Abgas, bestehend aus einem Fliehkraftabscheider (2) mit zahlreichen Entstaubungszellen (4) und einem nachgeschalteten, horizontal durchströmten Elektrofilter (3), wobei die Entstaubungszellen in mindestens einer horizontalen Reihe (A, B), die senkrecht zu der am Eingang des Elektrofilters herrschenden Strömungsrichtung (C) verläuft, angeordnet sind, zumindest in der dem Elektrofilter nächstgelegenen Reihe (A) die Einlaßöffnungen der Entstaubungszellen höher liegen als das Elektrofilter, die Gasströmungsrichtung in den Entstaubungszellen im wesentlichen senkrecht von oben nach unten verläuft und jede Entstaubungszelle im unteren Bereich einen Staubaustritt und ein Reingasrohr (8) besitzt, das weitgehend entstaubtes Reingas zum Elektrofilter leitet, dadurch gekennzeichnet, daß je zwei benachbarte Reingasrohre (8) einer Reihe (A, B) in den dachförmigen oberen Abschluß (10) eines gemeinsamen Reingasschachtes (11) münden, daß jeder Reingasschacht (11) taschenartig mit zwei senkrechten Seitenwänden (12), einer schrägen Rückwand (20) und einer zum Elektrofilter (3) hin offenen Austrittsseite ausgebildet ist und daß zwischen benachbarten Reingasschächten (11) eine zu einem Staubbunker (14) geneigte Staubleitwand (13) derart angeordnet ist, daß sie den Durchtritt des vom Fliehkraftabscheider (2) abgeschiedenen Staubes zum Elektrofilter (3) verhindert.

2. Vorrichtung nach Anspruch 1, dadurch gekennzeichnet, daß die Breite der Reihe oder Reihen (A, B) der Entstaubungszellen (4) gleich der Breite des Elektrofilters (3) ist.

3. Vorrichtung nach Anspruch 1 oder 2, dadurch gekennzeichnet, daß bei mehreren Reihen (A, B) von Entstaubungszellen (4) diese in der Höhe gestaffelt angeordnet sind und die dem Elektrofilter (3) nächstliegende Reihe (A) die höchstliegende ist.

4. Vorrichtung nach Anspruch 1, dadurch gekennzeichnet, daß jeder Reingasschacht (11) mindestens ein Leitblech (18) zur Führung des Gases aufweist.

5. Vorrichtung nach Anspruch 1 oder einem der folgenden, dadurch gekennzeichnet, daß der horizontale Abstand zwischen benachbarten Reingasschächten (11) etwa der Schachtbreite entspricht.

**Claims**

1. Apparatus for removing dust from exhaust gas in a dry process, comprising a centrifugal separator (2) having a multitude of dust-collecting cells (4), and a horizontal-flow electrostatic precipitator (3), which succeeds the centrifugal separator, the dust-collecting cells are arranged in at least one horizontal row (A, B), which extends at right angles to the direction of flow at the inlet of the electrostatic precipitator, the inlet openings of the dust-collecting cells at least in the row which is nearest to the electrostatic precipitator are disposed above the electrostatic precipitator, the direction of gas flow in the dust-collecting cells is downward and substantially vertical and each dust-collecting cell has at its lower portion an exit for dust and a pure gas tube (8), from said tube substantially dedusted pure gas flows to the electrostatic precipitator, characterized in that each pair of pure gas tubes (8) of a row (A, B) opens through a roofshaped top cover (10) of a common pure gas well (11), each pure gas well (11) has the shape of a pocket formed by two vertical side walls (12) and an inclined rear wall (20), said well having an open side facing the electrostatic precipitator, dust chutes (13) inclined towards a dust bin (14) are disposed between adjacent pure gas wells (11), said dust chutes prevent penetration of dust from the centrifugal separator (2) to the electrostatic precipitator (3).

2. Apparatus according to claim 1, characterized in that the row or rows (A, B) of dust-collecting cells (4) have the same width as the electrostatic precipitator (3).

3. Apparatus according to claim 1 or 2, characterized in that the dust-collecting cells (4) of the centrifugal separator (2) are arranged in a plurality of vertically spaced apart rows (A, B) and the uppermost of said rows (A) is nearest to the electrostatic precipitator (3).

4. Apparatus according to claim 1, characterized in that each triangular pure gas well (11) comprises at least one guide plate (18) for guiding the gas.

5. Apparatus according to claim 1 or any of the following claims, characterized in that the horizontal distance between adjacent pure gas wells (11) is approximately as large as the width of each well.

## Revendications

1. Installation pour l'élimination sèche de poussières de gaz résiduaires comprenant un dépoussiéreur par force centrifuge (2) ayant de nombreuses cellules de dépoussiérage (4) ainsi qu'un électrofiltre (3) disposé en aval et parcouru par un flux horizontal, les cellules de dépoussiérage (A, B) étant disposées en au moins une rangée horizontale qui est perpendiculaire à la direction (C) du flux existant à l'entrée de l'électrofiltre, au moins les orifices d'admission desdites cellules de dépoussiérage qui font partie de la rangée (A) la plus proche de l'électrofiltre étant disposées à un niveau plus élevé que celui-ci, le sens du flux de gaz traversant à peu près verticalement les cellules de dépoussiérage étant orienté du haut vers le bas et chaque cellule de dépoussiérage possédant à sa partie inférieure une sortie pour les poussières ainsi qu'un conduit de gaz pur (8) qui amène à l'électrofiltre du gaz pur, en grande partie dépoussiéré, caractérisée en ce que des conduits de gaz pur (8) voisins l'un de l'autre, d'une même rangée (A, B) aboutissent par deux à l'extrémité supérieure (10) d'une cheminée pour gaz pur (11) commune, fermée en forme de toit, en ce que chaque cheminée pour gaz pur (11) a la forme d'une poche ayant deux parois latérales verticales (12), une paroi arrière inclinée (5) et un côté formant sortie vers l'électrofiltre (3) et en ce qu'une paroi (13) dirigeant les poussières inclinée vers une trémie à poussières (14) est disposée entre deux cheminées pour gaz pur (11) voisines l'une de l'autre de sorte qu'elle empêche le passage des poussières séparées dans le dépoussiéreur à force centrifuge (2) vers l'électrofiltre (3).

2. Installation suivant la revendication 1 caractérisée en ce que la largeur de la rangée ou des rangées (A, B) de cellules de dépoussiérage (4) est égale à la largeur de l'électrofiltre (3).

3. Installation suivant l'une des revendications 1 ou 2, caractérisée en ce que, lorsqu'il y a plusieurs rangées (A, B) de cellules de dépoussiérage (4), celles-ci sont échelonnées et en ce que la rangée (A) la plus proche de l'électrofiltre (3) se trouve au niveau le plus élevé.

4. Installation suivant la revendication 1 caractérisée en ce que chaque cheminée pour gaz pur (11) présente au moins un déflecteur (18) pour guider le gaz.

5. Installation suivant la revendication 1 ou l'une des revendications suivantes, caractérisée en ce que la distance horizontale entre des cheminées de gaz pur (11) voisines l'une de l'autre correspond approximativement à la largeur de ladite cheminée.

Fig. 1

0 014 782

Fig. 2

7

Fig.3

Fig. 4

0 014 782